# EUROPÄISCHE PATENTSCHRIFT

(11) **EP 1 200 301 B1**
(45) Veröffentlichungstag und Bekanntmachung des Hinweises auf die Patenterteilung: **23.06.2004**
(21) Anmeldenummer: 00947951.0
(22) Anmeldetag: 07.07.2000
(51) Int. Cl.: B62D 15/02, G01B 7/30, G01D 5/20

(54) **VERFAHREN ZUR BESTIMMUNG DER WINKELPOSITION EINES DREHBEWEGUNGEN AUSFÜHRENDEN ROTATORISCHEN TEILS**
METHOD FOR DETERMINING THE ANGULAR POSITION OF A ROTATIVE PART WHICH PERFORMS A ROTATIONAL MOVEMENT
PROCEDE PERMETTANT DE DETERMINER LA POSITION ANGULAIRE D'UNE PARTIE ROTATIVE EXECUTANT DES MOUVEMENTS DE ROTATION

(30) Priorität: 28.07.1999 DE 19935429
(43) Veröffentlichungstag der Anmeldung: 02.05.2002
(73) Patentinhaber: Conti Temic Microelectronic GmbH, 90411 Nürnberg (DE)
(72) Erfinder: GLEMSER, Andreas, D-88662 Überlingen (DE); JOCHUM, Herbert, D-88263 Horgenzell (DE); SCHAUER, Lothar, D-88677 Markdorf (DE); SERR, Helmut, D-88045 Friedrichshafen (DE)
(86) Internationale Anmeldenummer: PCT/EP2000/006475
(87) Internationale Veröffentlichungsnummer: WO 2001/008961

(56) Entgegenhaltungen:
- DE-A- 19 835 886
- DE-A- 19 904 000

## Beschreibung

Die Erfindung betrifft ein Verfahren zur Bestimmung der Winkelposition eines Drehbewegungen ausführenden rotatorischen Teils gemäß dem Oberbegriff des Patentanspruchs 1, wie es aus der DE 198 35 886 A1 bekannt ist.

In vielen Anwendungsgebieten, insbesondere im Kfz-Bereich, in der Automatisierungs-, Meß-, Steuerungs- und Übertragungstechnik oder im Werkzeugmaschinenbereich, muß der Drehwinkel und damit die Winkelposition von Drehbewegungen ausführenden Teilen bestimmt werden. Bei Kraftfahrzeugen beispielsweise ist für viele Anwendungsfälle der Lenkradwinkel bzw. die Lenkradposition als Maß für die Stellung des Lenkrads hilfreich bzw. unerläßlich, insbesondere zum Betrieb von Fahrdynamiksystemen (beispielsweise adaptive Dämpfungssysteme, Allradantrieb, Hinterachslenkung), Fahrassistenzsystemen (beispielsweise Abstandswarnsysteme. Abstandsregelungssysteme) oder Navigationssystemen. Zur Erfassung der Winkelposition sind neben magnetischen Verfahren (inkrementale Messung des Winkels mittels einer Vielzahl von Magneten) auch optische Verfahren gebräuchlich (berührungslose und verschleißfreie Messung des Winkels mittels codierter Scheiben). Bestandteil des die Drehbewegung ausführenden rotatorischen Teils ist in vielen Fällen ein auf einem Träger geführtes und in einem Gehäuse angeordnetes flexibles flaches Band (Wickelband), das aus einem einzelnen elektrischen Leiter oder mehreren parallelen elektrischen Leitern besteht und mit dem eine elektrisch leitende Verbindung und eine Signalübertragung zu einem stationären Teil hin realisiert werden kann; bsp. wird ein derartiges Wickelband in Kraftfahrzeugen zur elektrischen Verbindung von Lenkrad und Lenksäule verwendet. Oftmals sollen auch Drehbewegungen des rotatorischen Teils von mehr als 360° realisiert und erfaßt werden, bsp. sind 6 vollständige Umdrehungen des Lenkrads bezüglich der feststehenden Lenksäule möglich; um die Länge des für die Drehbewegung erforderlichen Wickelbands zu verkürzen, kann eine Umlenkung (bsp. mittels einer Umlenkrolle realisiert) vorgesehen werden. Zur Bestimmung der Winkelposition des Drehbewegungen ausführenden rotatorischen Teils (zur Positionsbestimmung) wird der relative Drehweg des Wickelbands mittels einer Meßeinrichtung erfaßt und ausgewertet; gemäß der gattungsbildenden DE 198 35 886 A1 wird die relative Zahl der Umdrehungen zwischen dem stationären und dem rotatorischen Teil durch eine Messung der sich entsprechend dem Drehweg bzw. der Umdrehungslage einstellenden bzw. ändernden Induktivität des Wickelbands erfaßt, wobei die Messung zwischen einem feststehenden und einem beweglichen Anschluß eines Leiters des Wickelbands erfolgt. Nachteilig hierbei ist, daß die zu messenden Induktivitäten bzw. Induktivitätsänderungen des Wickelbands äußerst klein sind und damit parasitäre Induktivitäten (bsp. die von Zuleitungen) die Induktivitätsmessung verfälschen, daß sich ein nichtlinearer Zusammenhang zwischen dem Drehweg und der Induktivität ergibt und daß zwischen dem Anfang und dem Ende des die Induktivität bildenden Wickelbands eine separate Rückleitung erforderlich ist, welche die ungestörte Bewegung des Wickelbands und des rotatorischen Teils behindert und so die Wirkungsweise beeinträchtigt und eine serienmäßige Verwendung dieses Verfahrens nicht zuläßt.

Der Erfindung liegt die Aufgabe zugrunde, ein einfaches Verfahren zur Bestimmung der Winkelposition eines Drehbewegungen ausführenden rotatorischen Teils mit vorteilhaften Eigenschaften bezüglich der Zuverlässigkeit, der Kosten und des Einsatzbereichs anzugeben.
Diese Aufgabe wird gemäß der Erfindung durch die Merkmale im Kennzeichen des Patentanspruchs 1 gelöst.
Vorteilhafte Ausgestaltungen der Erfindung sind Bestandteil der weiteren Patentansprüche.

Beim vorgestellten Verfahren wird eine Bestimmung der Winkelposition und damit eine absolute Positionserfassung eines Drehbewegungen ausführenden rotatorischen Teils über den gesamten Umdrehungsbereich des Wickelbands ohne bewegte mechanische Zusatzkomponenten, ohne zusätziiches Drehmoment, Reibung oder Geräuschentwicklung realisiert, indem die elektromagnetische Feldkopplung zwischen dem Wickelband und mindestens einer (zusätzlichen) Meß-induktivität (Koppelspule) erfaßt und ausgewertet wird. Die mindestens eine Meß-Induktivität ist derart am Wickelband oder in der Nähe des Wickelbands angeordnet, daß sich eine möglichst gute elektromagnetische Feldkopplung zwischen dem Wickelband und der Meß-induktivität ergibt. Bsp. ist die mindestens eine Meß-Induktivität in einer paralleien Ebene zum Wickelband angeordnet, bsp. auf dem Gehäuse oder dem Träger des Wickelbands aufgebracht. Die mindestens eine Meß-Induktivität kann bsp. als Kupferspule oder als auf einer Leiterplatte angeordnete Leiterbahnen realisiert werden. Falls mehr als eine Meß-Induktivität vorgesehen ist, kann eine dieser Meß-Induktivitäten für Referenzmessungen zur Kalibrierung herangezogen werden.
Die Erfassung der elektromagnetischen Feldkopplung erfolgt mittels der Einspeisung einer Wechselspannung als Eingangssignal entweder über eine Meß-Induktivität oder über das Wickelband und der Auswertung der Ausgangsspannung als resultierendes Ausgangssignal hinsichtlich Änderungen der Phase und/oder der Amplitude und/oder der Frequenz. Die Auswertung der Ausgangssignale kann nach unterschiedlichen Prinzipien erfolgen, entweder durch Verhältnisbildung der Meßgröße Ausgangsspannung (ratiometrisch) oder durch direkte Messung von Absolutwerten der Meßgröße Ausgangsspannung, wobei das Ausgangssignal (die Ausgangsspannung) in einen entsprechenden Drehwinkel und damit in eine entsprechende Winkelposition des rotatorischen Teils umgesetzt wird. Die Leitungen zum Einspeisen des Eingangssignals (Hinleiter) und zum Abgreifen des Ausgangssignals (Rückleiter) können innerhalb des Gehäuses des Wickelbands geführt werden. Falls die Breite der Wicklungen der Meß-Induktivität kleiner als die Breite der elektrischen Leiter des Wickelbands ist, kann als Rückleiter derjenige Teilbereich des Wickelbands verwendet werden, der innerhalb des Wickelbands die geringste elektromagnetische Feldkopplung zu den Wicklungen der Meß-induktivität aufweist. Falls die Breite der Wicklungen der Meß-induktivität mindestens so groß wie die Breite des Wickelbands ist, kann ein Teilbereich des Wickelbands durch eine elektromagnetische Abschirmung derart geschirmt werden, daß eine elektromagnetische Feldkopplung mit dem Rückleiter teilweise oder vollständig vermieden wird.
Bsp. kann zur Erfassung der Meßgrößen und zur Auswertung der Ausgangssignale ein A/D-Wandler und ein Spitzenwertgleichrichter zur Effektivwertmessung vorgesehen werden.
Die Meß-Induktivitäten bzw. deren Anschlüsse (Zuleitungen) werden derart bezüglich des Wickelbands angeordnet, daß eine Aufhebung oder Schwächung des vom Wickelband generierten Magnetfetds und damit eine Reduzierung oder Aufhebung des Meßsignals vermieden wird.

Beim vorgestellten Verfahren kann vorteilhafterweise eine kontaktlose Positionserfassung (Bestimmung der Winkelposition) des Drehbewegungen ausführenden rotatorischen Teils erfolgen, ohne daß hierdurch mechanische Reibungen, Drehmomente oder Geräusche auftreten oder mechanisch Teile bewegt werden. Die Positionserfassung kann über mehrere Umdrehungen des beweglichen Teils mit hohem Signalhub durchgeführt werden, wobei der Erfassungsbereich nur durch den Drehbereich des Wickelbands begrenzt wird und wobei eine hohe Störsicherheit, insbesondere gegenüber Lageänderungen des Wickelbands im Gehäuse sowie gegenüber äußeren elektromagnetischen Einkopplungen gegeben ist.

Das Verfahren soll im folgenden anhand eines Ausführungsbeispiels im Zusammenhang mit der Zeichnung beschrieben werden.

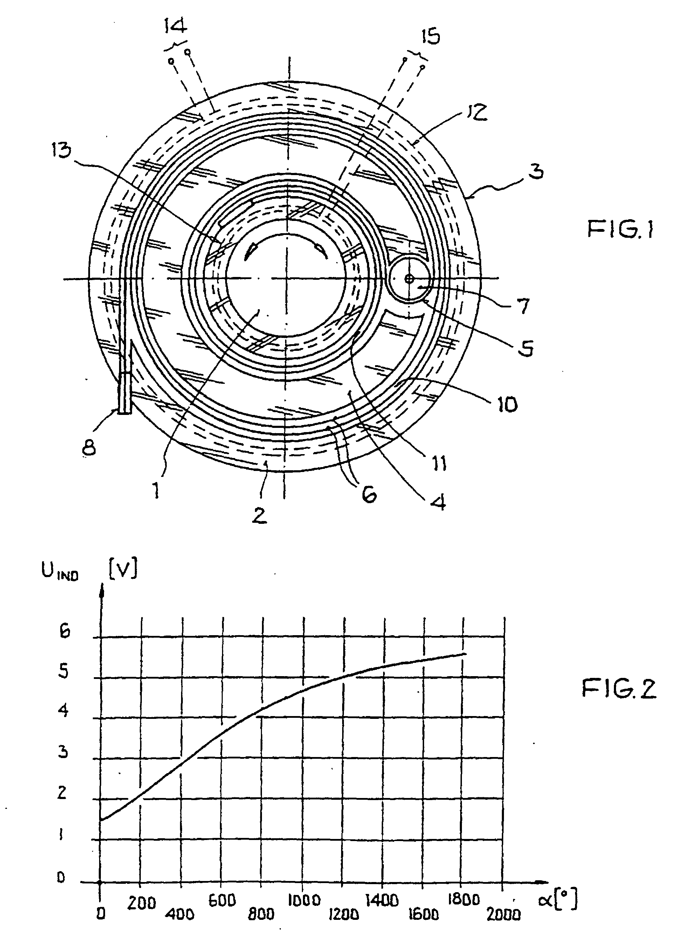

Hierzu ist in der Figur 1 in Draufsicht eine schematische Darstellung der Anordnung des Wickelbands und in der Figur 2 ein Meßdiagramm mit der magnetischen Kopplung als Funktion des Drehwinkels dargestellt.

Gemäß der Figur 1 ist zur Bestimmung der Winkelposition des Drehbewegungen ausführenden rotatorischen Teils 1 bezüglich des feststehenden stationären Teils 2 ein in einem Gehäuse 3 angeordnetes und auf einem Träger 4 aufgebrachtes Wikkelband 5 vorgesehen, das aus parallel geführten elektrischen Leitern 6 besteht. Die durch die Drehbewegung vorgegebene erforderliche Länge des Wickelbands 5 wird durch die Umlenkrolle 7 begrenzt und in einen äußeren Teil 10 und einen inneren Teil 11 aufgespalten. Zur Signalübertragung und zur elektrischen Verbindung zum feststehenden stationären Teil 2 hin sind die beiden elektrischen Anschlüsse 8, 9 des Wickelbands 5 vorgesehen, an denen Signalleitungen angeschlossen werden können (bsp. ein Steckkontakt).
Bei einer Drehbewegung des rotatorischen Teils 1 ändert sich die Aufwicklung des Wickelbands 5 und damit das Längenverhältnis von "Außenlagen" des äußeren Teils 10 des Wickelbands 5 zu den "Innenlagen" des inneren Teils 1 1 des Wickelbands 5. Zur Erfassung der hieraus resultierenden sich ändernden magnetischen Eigenschaften sind bsp. zwei als Spulenwicklungen realisierte Meß-Induktivitäten 12, 13 vorgesehen, die bsp. im Gehäuse 3 des Wickelbands 5 unmittelbar angrenzend in einer parallelen Ebene zum Wickelband angeordnet sind und die jeweils Anschlüsse 14, 15 zum Abgreifen von Signalen aufweisen; die erste Meß-Induktivität 12 mit den Anschlüssen 14 ist hierbei an die "AuBenlagen" des äußeren Teils 10 des Wickelbands 5 gekoppelt, die zweite Meß-Induktivität 13 mit den Anschlüssen 15 an die "Innenlagen" des inneren Teils 11 des Wickelbands 5. Durch die beiden MeßInduktivitäten 12, 13 wird die aufgrund der Drehbewegung des rotatorischen Teils 1 und damit des Wickelbands 5 resultierende Änderung der magnetischen Kopplung zum Wickelband 5 hin erfaßt, indem bsp. in einen der Anschlüsse 8, 9 des Wickelbands 5 ein Wechselspannungssignal als Eingangssignal eingespeist wird und die sich an den Anschlüssen 14, 15 der beiden Meß-Induktivitäten 12, 13 ergebende Amplitude der Ausgangsspannung (der induzierten Spannung) gemessen wird.

In einem Anwendungsbeispiel soll die Winkelposition der Lenksäule eines Kraftfahrzeugs als rotatorischem Teil 1 bezüglich des mit dem Mantelrohr verbundenen stationären Teils 2 erfaßt werden, wobei der durch die drehbare Lenksäule 1 vorgegebene Lenkradwinkel in einem Bereich von 6 Lenkradumdrehungen (=̂ 2160°) liegen kann. Gemäß der Figur 2 ist die aufgrund der Drehbewegung resultierende in den Meß-Induktivitäten 12, 13 erfaßte Ausgangsspannung (induzierte Spannung U_{IND}) als Funktion des Drehwinkels α dargestellt. Hierbei kann ein Drehwinkel α von 0° bis ca. 1800° aufgrund der Änderung der induzierten Spannung U_{IND} erfaßt werden. Selbstverständlich sind auch Verfahren mit anderen als der hier beschriebenen Wikkelbandtechnik denkbar.

## Patentansprüche

1. Verfahren zur Bestimmung der Winkelposition eines Drehbewegungen ausführenden rotatorischen Teils (1), bei dem die sich entsprechend der,Drehbewegung ändernde Aufwicklung eines in einem Gehäuse (3) angeordneten und auf einem Träger (4) angeordneten, aus mindestens einem Leiter (6) bestehenden Wickelbands (5) ausgewertet wird,
**dadurch gekennzeichnet,**
**daß** mindestens eine Meß-Induktivität (12, 13) vorgesehen ist, mit der die elektromagnetische Feldkopplung zum Wickelband (5) erfaßt und hieraus der Drehwinkel des rotatorischen Teils (1) bestimmt wird.

2. Verfahren nach Anspruch 1, **dadurch gekennzeichnet, daß** die mindestens eine Meß-Induktivität (12, 13) als Spule mit einer vorgegebenen Anzahl von Windungen ausgebildet ist.

3. Verfahren nach Anspruch 1 oder 2, **dadurch gekennzeichnet, daß** die mindestens eine Meß-Induktivität (12, 13) als auf einem Trägerkörper angeordnete Leiterbahnstruktur realisiert ist.

4. Verfahren nach einem der Ansprüche 1 bis 3, **dadurch gekennzeichnet, daß** die mindestens eine Meß-Induktivität (12, 13) in einer parallelen Ebene bezüglich des Wickelbandes (5) angeordnet ist.

5. Verfahren nach einem der Ansprüche 1 bis 4, **dadurch gekennzeichnet, daß** als Eingangssignal eine Wechselspannung eingespeist wird und das die aufgrund der elektromagnetischen Feldkopplung induzierte Spannung (U_{IND}) hinsichtlich Amplitude und/oder Frequenz und/oder Phase ausgewertet und hieraus der Drehwinkel des rotatorischen Teils (1) bestimmt wird.

6. Verfahren nach einem der Ansprüche 1 bis 3, **dadurch gekennzeichnet, daß** mindestens zwei Meß-Induktivitäten (12, 13) vorgesehen sind, und daß mindestens eine Meß-Induktivität (12, 13) für Referenzmessungen herangezogen wird.

## Claims

1. Method of determining the angular position of a rotary part (1) executing rotational movements, whereby the change, corresponding to the rotational movement, of the take-up of a wound belt (5) disposed in a housing (3) and mounted on a carrier (4) and comprising at least one conductor (6) is evaluated,
**characterized in**
**that** at least one measuring inductor (12, 13) is provided, by means of which the electromagnetic field coupling to the wound belt (5) is detected and the rotation angle of the rotary part (1) is determined therefrom.

2. Method according to claim 1, **characterized in that** the at least one measuring inductor is designed as a coil having a defined number of windings.

3. Method according to claim 1 or 2, **characterized in that** the at least one measuring inductor (12, 13) is realized in the form of a printed conductor structure disposed on a carrier body.

4. Method according to one of claims 1 to 3, **characterized in that** the at least one measuring inductor (12, 13) is disposed in a parallel plane relative to the wound belt (5).

5. Method according to one of claims 1 to 4, **characterized in that** as an input signal an alternating voltage is supplied and the voltage (U_{IND}) induced as a result of the electromagnetic field coupling is evaluated with regard to amplitude and/or frequency and/or phase and the rotation angle of the rotary part (1) is determined therefrom.

6. Method according to one of claims 1 to 3, **characterized in that** at least two measuring inductors (12, 13) are provided, and that at least one measuring inductor (12, 13) is used for reference measurements.

## Revendications

1. Procédé pour la détermination de la position angulaire d'une pièce rotative (1) exécutant des mouvements de rotation, dans lequel on évalue l'enroulement, se modifiant en correspondance du mouvement de rotation, d'un ruban enroulé (5) agencé dans un boîtier (3) et sur un support (4) et constitué par au moins un conducteur (6),
**caractérisé en ce que** l'on prévoit au moins une inductance de mesure (12, 13) au moyen de laquelle on détecte le couplage de champ électromagnétique avec le ruban enroulé (5) et on en détermine l'angle de rotation de la pièce rotative (1).

2. Procédé selon la revendication 1, **caractérisé en ce que** ladite au moins une inductance de mesure (12, 13) est réalisée sous forme de bobine présentant un nombre prédéterminé de spires.

3. Procédé selon l'une ou l'autre des revendications 1 et 2, **caractérisé en ce que** ladite au moins une inductance de mesure (12, 13) est réalisée sous forme de structure à piste conductrice agencée sur un corps porteur.

4. Procédé selon l'une des revendications 1 à 3, **caractérisé en ce que** ladite au moins une inductance de mesure (12, 13) est agencée dans un plan parallèle par rapport au ruban enroulé (5).

5. Procédé selon l'une des revendications 1 à 4, **caractérisé en ce qu'**on applique une tension alternative à titre de signal d'entrée, on évalue la tension (U_{IND}), induite du fait du couplage de champ électromagnétique, à l'égard de l'amplitude et/ou de la fréquence et/ou de la phase, et on en détermine l'angle de rotation de la pièce rotative (1).

6. Procédé selon l'une des revendications 1 à 3, **caractérisé en ce que** l'on prévoit au moins deux inductances de mesure (12, 13), et **en ce que** l'on utilise au moins une inductance de mesure (12, 13) pour des mesures de référence.
